# EUROPEAN PATENT APPLICATION

(11) **EP 4 838 183 A1**
(43) Date of publication of application: **11.11.2026**
(21) Application number: 25174956.0
(22) Date of filing: 08.05.2025
(51) Int. Cl.: G01F 23/296

(54) **METHOD FOR DETERMINING THE LIQUID LEVEL IN A PUMP STATION**

(71) Applicant: Xylem Europe GmbH, 8200 Schaffhausen (CH)
(72) Inventor: LENNARTSSON, Benny, 126 47 Hägersten (SE); WESSMAN, Martin, 169 40 Solna (SE); NILSSON, Mikael, 169 37 Solna (SE)
(74) Representative: Brann AB

(57) **Abstract**

The invention relates to a method for determining the liquid level in a pump station (1) by utilizing a sound recording device (13). The pump station (1) comprises a tank (6), an inlet conduit (7) for providing influent liquid to the tank (6), at least one pump (2) for intermittently transporting the liquid into or away from the tank (6), and an outlet conduit (5) for guiding effluent liquid from the tank (6). The pump station (1) further comprises a control unit (11) operatively connected to the pump (2) and configured for monitoring and controlling the operation of the pump station (1). The method comprises the steps of: recording the natural-sound of the pump station (1) during operation of the pump station (1) using the sound recording device (13) located in the tank (6), preparing a plurality of natural-sound packages from the recorded natural-sound signal continuously during operation of the pump station (1), wherein each natural-sound package corresponds to a predetermined period of time of the entire operation of the pump station (1), preparing a frequency spectrum for each natural-sound package, processing each frequency spectrum to determine the liquid level in the pump station (1) corresponding to the natural-sound package, and outputting the liquid level in the pump station (1) corresponding to each natural-sound package.

## Description

### Technical field of the Invention

The present invention belongs to the technical field of pump stations and methods for monitoring and controlling the operation of such pump stations, especially pump stations configured for receiving/pumping liquid comprising solid matter, such as wastewater, but also pump stations configured for receiving/pumping fresh water, storm water, etc. The present invention belongs especially to a method for determining the liquid level in the pump station by utilizing a sound recording device. The pump station comprises a tank configured for temporary storage of a liquid, an inlet conduit for providing influent liquid to the tank, at least one pump for intermittently transporting the liquid into or away from the tank, and an outlet conduit for guiding effluent liquid from the tank. The pump station also comprises a control unit operatively connected to the pump and configured for monitoring and controlling the operation of the pump station.

The pump station is in operation when the tank is capable/configured to receive influent liquid, both when one or more pumps are active and when no pumps are active. A pump is considered active when pumping liquid into or away from the tank. Operation of the pump station comprises a plurality of pump cycles, wherein each pump cycle comprises a period of time when one or more pumps are active and a period of time when no pumps are active.

### Background of the Invention

A pump station typically has a reservoir/tank for holding a liquid, such as a container, a sump, a holding tank, a tank, etc. In some pump stations, there may be multiple reservoirs that are separated from each other or connected to each other. One or more pumps can be used to transport liquid into or away from the reservoir. For example, pumps may be used to transport sewage from a tank of a wastewater pump station to an intermediate/downstream pump station and/or to a wastewater treatment plant. The sewage may be pumped into the wastewater pump station, and/or may be under the effect of gravity. Alternatively, pumps may be used to transport liquid, such as fresh water or storm water, into a tank of a pump station for temporary storage. From such tank, the liquid may be pumped from the tank and/or may leave the tank under the effect of gravity when a valve is opened.

A typical liquid reservoir or pump station for wastewater/sewage has an inlet conduit to admit influent liquid to enter the tank and an outlet conduit through which the liquid is transported/discharged from the tank. Each liquid reservoir/tank has one or more pumps associated with the outlet piping and/or the inlet conduit. The pumps, when in operation and activated, transport the liquid into or away from the tank, as required based on appropriate control signals, e.g. pump start signal and pump stop signal that may be based on the liquid level in the tank. It is known to maintain and service pumps and pump stations at regular time intervals. However, this may result in pumps that are operating within acceptable parameters being serviced when not needed, and faulty pumps not being serviced when needed, thus resulting in failure. It is also known to monitor pump operating parameters, such as the individual pump efficiency (the electrical energy required to move a fixed volume of liquid), to determine whether a pump station is operating within acceptable parameters, and normal pump station service is based on the monitored parameters. However, the pump stations operate under different conditions, i.e. different operational environments, in relation to each other and also over time. One central parameter in such monitoring and control is the amount of pumped liquid, both in view of service and in view of overall control of a larger wastewater/pump station network.

It is always a goal when a pump station is dimensioned to avoid flooding of the pump station, i.e. a flow of liquid brimming the tank of pump station, as far as possible. It is also a goal that the pump station is dimensioned such that the pump is operated for intermittent pumping, i.e. alternating periods of active and deactive pump(s). When no pump is active the tank is filled by wastewater, and when the liquid level reaches a predetermined height in the tank (pump start level) the pump is activated, wherein the tank is emptied until the liquid level reaches a lower predetermined height in the tank (pump stop level). Seen in isolation, this would entail that it is beneficial to have a largely oversized pump station.

However, at the same time a too large pump station, i.e. a too large tank, provides other disadvantages, especially when too much wastewater is stored too long time in the pump station and/or stay too long time in the pump network before reaching the wastewater purification plant, such as nasty odour/stench and generation of corroding substances. Greater pump stations also entail higher production costs as well as increased maintenance costs.

Thus, there is a design trade-off resulting in that once and awhile a flooding event might occur, or at least periods of constant pumping will occur, following an exceptionally large inflow and/or malfunctioning pumps. Aging piping on the inlet side of the pump station leading to leakage inflow, unallowably connected rainwater piping leading to surplus rain inflow, rapidly increasing urbanisation leading to higher wastewater inflow, etc. will provide a greater inflow than considered when designing/ dimensioning the pump station. Constant pumping means that liquid is transported away from the tank, but the liquid level does not reach the pump stop level, i.e. the inflow is essentially equal or greater than to pumped flow.

During normal operation of the pump station, i.e. intermittent pumping, there are known ways to determine/estimate the pumped flow leaving a pump station, both using dedicated flowmeters and without using flowmeters. It is important to know the amount of the pumped flow, in order to have control of the specific pump station and also in order to control the downstream pump stations in a greater wastewater system/network. However, the use of dedicated flowmeters entails expensive solutions in order to obtain reliable measuring results. The reliability of the result of the flowmeter is dependent on the location/installation of the flowmeter, such as the material of the outlet pipe and other devices in the pump station, the shape of the outlet pipe before and after the flowmeter, etc. Thus, a small pump station such as a cylinder-shaped tank buried in the ground, cannot typically use a flowmeter arranged in the tank since the result of the flowmeter is not reliable. A flowmeter must be located outside the tank, and at a location having long and straight pipe sections upstream and downstream the flowmeter, and such installations are not feasibly possible for small pump stations due to too large footprint and too large cost.

The known ways to determine/estimate the pumped flow leaving a pump station without using a dedicated flowmeter is usually based on level sensors monitoring the liquid level and liquid level change in the tank, i.e. known as liquid-level-based or volume-based estimation, but such determination/estimation is dependent on accurate/reliable and efficient liquid level sensors installed in the tank of the pump station.

Thereto, it is vital to obtain early indications that the liquid level in the tank increases despite one pump being active, and/or to obtain a signal that a high liquid level in the tank has been reached, such that additional pump(s) may be activated in order to avoid flooding.

Thus, normal operation of pump stations, i.e. normal monitoring and control of the operation of pump stations, is reliable on accurate and efficient level sensors. However, all known level sensors have drawbacks. Some installations utilize a pressure sensor submerged in the wastewater in the tank. The pressure sensor is reliable to determine the amount of liquid located above the sensor. However, such pressure sensors may measure/provide incorrect values if it is clogged/fouled or some large piece of solid matter is stuck over the sensor. Some installations utilize non-contact ultrasonic sensors or radar sensors, i.e. a sensor having a transmitter and a receiver, located at the top of the tank, wherein the time of flight for reflection of a sound/wave between the transmitter and the receiver theoretically provides a reliable determination. However, such ultrasonic sensors are sensitive to erroneous reflections from different elements and waste floating in the tank, giving false liquid level determination. Some applications utilize floating level sensors/switches that are located at specific predetermined heights in the tank, i.e. pump stop level, pump start level, heigh level, etc. However, such floating level sensors may become clogged/fouled/blocked and provide false information. Thereto, such floating level sensors obviously can only measure predetermined liquid levels.

Thus, even though the known liquid level sensors are good, there is a specific need to find a liquid level sensor that has no drawbacks and that can be used in combination with or instead of the known liquid level sensors.

### Object of the Invention

The present invention aims at obviating the aforementioned disadvantages and failings of previously known pump station monitoring and control systems.

A primary object of the present invention is to provide an improved method for determining the liquid level in a pump station by utilizing a sound recording device, whereby a non-contact determination of the liquid level in the pump station can be made in an accurate and efficient way. An accurately determined liquid level in the pump station may be used for multiple different purposes. For instance, accurate knowledge of the momentary liquid level in a pump station may be used to determine the pumped flow from the pump station, be used to start and stop the pumps, determine the inflow of liquid, determine the outflow of liquid, etc.

### Summary of the Invention

According to the invention at least the primary object is attained by means of the initially defined method for determining the liquid level in a pump station by utilizing a sound recording device, having the features defined in the independent claim. Preferred embodiments of the present invention are further defined in the dependent claims.

According to the present invention, there is provided a method for determining the liquid level in a pump station by utilizing a sound recording device, wherein the method comprises the steps of:
- recording the natural-sound of the pump station during operation of the pump station using the sound recording device located in the tank,
- preparing a plurality of natural-sound packages from the recorded natural-sound signal continuously during operation of the pump station, wherein each natural-sound package corresponds to a predetermined period of time of the entire operation of the pump station,
- preparing a frequency spectrum for each natural-sound package,
- processing each frequency spectrum to determine the liquid level in the pump station corresponding to the natural-sound package, and
- outputting the liquid level in the pump station corresponding to each natural-sound package.

Thus, the present invention is based on the insight that a reliable determination/estimation of the liquid level in a pump station can be established using a non-contact equipment that passively and continuously monitors/records the natural-sound of the pump station. Thus, the inventors have realized that by only using a simple microphone (sound recording device), i.e. no speaker/transmitter, no ultrasound sensors, etc., still a determination of the present liquid level in the pump station may be made with great accuracy. In contrast to other known liquid level sensors, the inventive system/method has no direct drawbacks, i.e. the microphone cannot be clogged and there is no speaker/transmitter that can fail. Thus, the inventive system/method is suitable to be used as a primary liquid level determination, as a complementary liquid level determination in combination with floating level sensors, and/or as a redundant/safety liquid level determination.

It shall be pointed out that the natural-sound of the pump station is the sound that is naturally observed in the pump station during normal operation of the pump station. Thus, no artificial/addition sound is generated/caused by any system specifically dedicated for liquid level determination, i.e. the pump station is free from any sound generating/causing device especially or exclusively dedicated for being used for liquid level determination/estimation.

According to various example embodiments of the present invention each natural-sound package corresponds to a predetermined period of time that is equal to or more than 0,5 second and equal to or less than 10 seconds, preferably equal to or more than 1 seconds and equal to or less than 5 seconds. Thus, the period of time of each natural-sound package has to be long enough to collect enough information to be able to determine the liquid level in the pump station, and at the same time the period of time of each natural-sound package has to be short enough to represent a specific liquid level. Thus, if too little information is collected the accuracy will be too low, and using a too long period of time the liquid level might change too much during a specific natural-sound package and thereby the accuracy may risk to be too low.

According to various example embodiments of the present invention the natural-sound of the pump station comprises at least one of: the sound of water splashes originating from influent liquid entering the tank, the sound of the active pump pumping liquid into or away from the tank, the sound of the liquid flow in the outlet conduit, the sound of a fan configured to ventilate the tank, the sound of a flush valve configured to prevent settling in the tank, and any sound from the pump station surroundings such as traffic sound.

According to various example embodiments of the present invention, the step of processing each frequency spectrum to determine the liquid level in the pump station corresponding to the natural-sound package, comprises the sub-steps of:
- entering the frequency spectrum in a machine-learning model trained to determine the liquid level in the pump station, and
- determining the liquid level in said pump station corresponding to the natural-sound package using the trained machine-learning model.

Thus, according to this embodiment, the inventive method/system uses a machine learning model that is trained on the specific pump station.

According to various example embodiments of the present invention, the control unit comprises information about the total height of the tank, wherein the step of processing each frequency spectrum to determine the liquid level in the pump station corresponding to the natural-sound package, comprises the sub-steps of:
- processing the frequency spectrum to determine at least one resonance frequency of the air cavity located between the liquid level and the top of the tank,
- determining the vertical distance between the liquid level and the top of the tank, based on the determined at least one resonance frequency of the air cavity located between the liquid level and the top of the tank, and
- determining the liquid level in the pump station based on the total height of the tank and the determined vertical distance between the liquid level and the top of the tank.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of an example embodiment of a pump station according to the present invention, and
- Fig. 2: is a schematic flowchart of the present invention on a general level.

### Detailed description of preferred embodiments of the invention

The invention is applicable to a pump station and concern monitoring and control of a pump station.

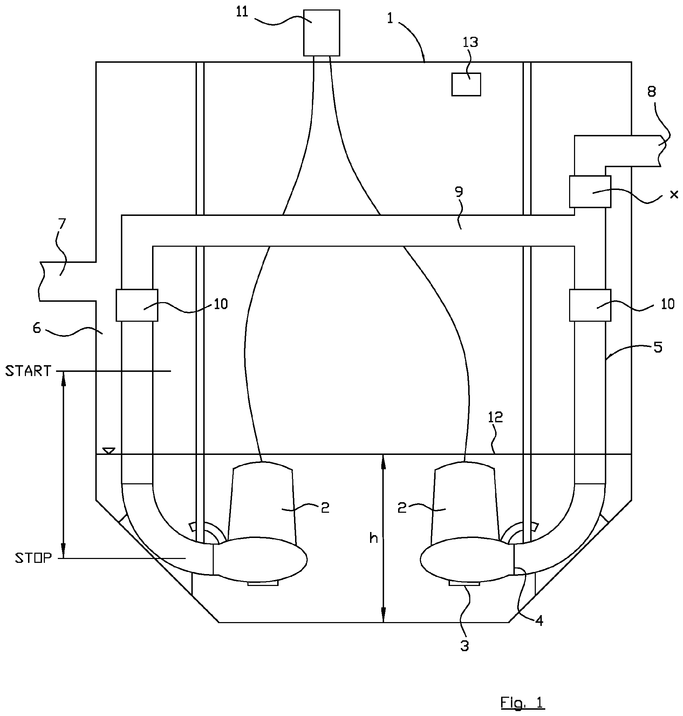

Reference is initially made to figure 1 illustrating a pump station 1, e.g. a wastewater pump station, however other liquids may be pumped and the invention is not limited to wastewater. The present invention also comprises other types of pump stations, i.e. configured for fresh water, storm water, etc.

The pump station 1 comprises at least one pump 2 having a pump inlet 3 and a pump outlet 4, an outlet pipe 5 connected to the pump 2 and extending from the pump outlet 4. The pump station 1 comprises a tank 6, also known as reservoir, sump, etc. configured for temporary storage of a liquid. The pump station 1 comprises an inlet conduit 7 for incoming/influent liquid and an outlet 8 for discharged/effluent liquid. The pump 2 is configured for transporting the liquid away from the tank 6 via the outlet of the pump station 1, i.e. the outlet pipe 5 and the outlet 8. The pump 2 is preferably located in the tank 6, and the pump 2 may be located in a partly or a fully submerged position or in a dry position in the tank 6, or be located in a dry position outside the tank 6.

According to alternative embodiments, the pump 2 may be associated with the pump inlet 3 and configured to transport liquid into the tank 6, and the liquid may be discharged from the tank 6 via the outlet 8 using a valve and gravity.

The pump station 1 may also comprise a level sensor located in the tank 6 and for instance in a position always submerged when the pump station 1 is in operation, i.e. when the pump station 1 is configured and intended to receive, store and discharge liquid. Such level sensor is for instance a pressure sensor. Thus, such level sensor is preferably located below the inlet 3 of the pump 2, and/or located below a pump stop level. According to various embodiments the pump station 1 may comprise a plurality of floating level sensors, such as level switches located at different levels in the tank, e.g. pump start level and pump stop level, which will be tilted/influenced by the liquid surface.

Usually, the pump stations 1 comprises at least two pumps. Especially a pump station 1 disclosed in figure 1, wherein the second pump is used to increase the output/pump capacity of the pump station 1 when the inflow increases and/or as a backup if the first pump malfunctions and/or the plurality of pumps alternate in order to even out the load. The second pump having a pump inlet and a pump outlet, an outlet pipe 9 extending from the pump outlet and is connected to the outlet pipe 5 of the first pump 2. The pump station 1 may comprise one or more non-return valves 10 arranged to prevent the pumped flow from one of the pumps to return to the tank 6 via the other pump, and also to prevent the liquid in the outgoing piping from returning to the tank 6 when the pumps are deactivated. The plurality of pumps 2 may be of the same or different size, i.e. in regards to rated power and pump capacity.

A local control unit 11 is operatively connected to the pumps 2 and to different sensors in the pump station 1, and may further be operatively connected to a remote/external control unit (not shown). The local control unit 11 monitors the operation of the pump station 1 and controls the operation of the pump 2 based thereon. The local control unit 11 may by partly or fully located inside the pump 2. According to alternative embodiments the local control unit is located outside the pump 2, or the local control unit 11 is separated into an external sub-unit and an internal sub-unit. The control unit 11 is also configured for executing the steps of the inventive method.

External outlet piping is connected to the outlet 8 of the tank 6 and the external outlet piping guides the pumped liquid for example to another pump station and/or to a wastewater treatment plant. Everything described in connection with said at least one pump 2 is applicable also for the other pumps in the pump station 1. During operation of the pump station 1 the liquid level 12 in the tank 6 will rise and fall depending on the influent liquid flow and discharged/effluent liquid flow, including the operation of the pump(s) 2. The pump station 1 also comprises a sound recording device 13, i.e. a microphone, that is operatively connected to the control unit 11.

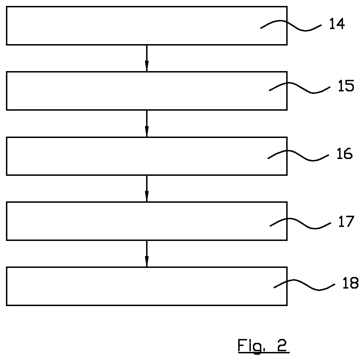

Reference is now also made to figure 2. The inventive method comprises the steps of:
- recording the natural-sound of the pump station 1 during operation of the pump station 1 using the sound recording device 13 located in the tank 6, [step 14]
- preparing a plurality of natural-sound packages from the recorded natural-sound signal continuously during operation of the pump station 1, wherein each natural-sound package corresponds to a predetermined period of time of the entire operation of the pump station 1, [step 15]
- preparing a frequency spectrum for each natural-sound package, [step 16]
- processing each frequency spectrum to determine the liquid level in the pump station 1 corresponding to the natural-sound package, [step 17] and
- outputting the liquid level in the pump station 1 corresponding to each natural-sound package. [step 18]

Step 14, recording the natural-sound of the pump station 1, inevitably entails that there are not any artificial sounds generated in the pump station 1. Thus, the pump station 1 lacks a specific sound transmitter/generator/speaker. The natural-sound of the pump station 1 is the sound that is naturally generated/caused during the normal operation of the pump station. The sound recording device 13 is preferably located at the top of the tank 6 in order to avoid being submerged even if the pump station 1 is flooded, a possible flooding outlet of the pump station is located below the top of the pump station. During the recording of the natural-sound of the pump station 1, a natural-sound signal is generated, i.e. an audio file/signal covering the entire operation of the pump station.

Step 15, preparing a plurality of natural-sound packages from the recorded natural-sound signal, entails that smaller chunks of the natural-sound signal are separated/isolated. Each natural-sound package corresponds to a predetermined period of time that is preferably equal to or more than 0,5 seconds and equal to or less than 10 seconds, more preferably equal to or more than 1 second and equal to or less than 5 seconds. The period of time cannot be too short, since a too short period of time has the risk that it does not provide enough information. The period of time cannot be too long, since a too long period of time has the risk that the period of time corresponds to a large liquid level change and thereby the information is not distinct. It shall be pointed out that according to some embodiments/applications, the predetermined period of time may be as long as 30 seconds. For instance applicable when the liquid level change is slow and/or the sound is barely audible.

According to various embodiments the entire natural-sound signal is divided into natural-sound packages. According to other various embodiments natural-sound packages are generated/prepared at even intervals that are separated from each other. For instance, when no pumps 2 are active the interval may be longer than when one or more pumps 2 are active, since the liquid level change is usually slower when no pumps 2 are active than when one or more pumps 2 are active. According to other various embodiments some natural-sound packages follow each other without any time gap, and some natural-sound packages are separated in time. For instance, when no pumps 2 are active there may be an interval between the natural-sound packages and when one or more pumps 2 are active there is no time gap between the natural-sound packages, since the liquid level change is usually slower when no pumps 2 are active than when one or more pumps 2 are active. Thus, each natural-sound package is a short audio file/signal.

Preferably each natural-sound package has a time label, i.e. metadata that may be used to identify the time of occurrence of the specific natural-sound package. Independently the length of the period of time, the liquid level associated to the natural-sound package is preferably the liquid level that is present at the end of the period of time, or at the middle of period of time.

According to various embodiments, the natural-sound of the pump station 1 comprises at least one of: the sound of water splashes originating from influent liquid entering the tank 6, the sound of the active pump 2 pumping liquid into or away from the tank 6, the sound of the liquid flow in the outlet conduit 5, the sound of a fan configured to ventilate the tank 6, the sound of a flush valve configured to prevent settling in the tank 6, and any sound from the pump station surroundings such as traffic sound.

Step 16, preparing a frequency spectrum, entails that the natural-sound signal is analyzed and converted into a visual/digital representation of the natural-sound of the pump station 1. Thus, the mutual relationship between the intensity of the different frequencies is visualized/captured and/or the absolute intensity of the different frequencies is visualized/captured. The analysis of the spectral/frequency content of the audio signal is preferably made by Fast Fourier Transform (FFT). The preparation of the frequency spectrum may also comprise different measures to improve the frequency spectrum.

During operation of a pump station, some high intensity/energy frequencies will change over time in connection with change of liquid level, some high intensity/energy frequencies are only visible when one or more pumps are active, some high intensity/energy frequencies does not change over time, etc. Altogether, the frequency spectrum for each natural-sound package is essentially unique.

It shall be pointed out that the present invention as defined hereinabove does not stipulate a necessary order, i.e. some of the steps of the method may be performed in different orders or concurrently. For instance, the step of preparing a frequency spectrum for each natural-sound package [step 16], may be performed by preparing a frequency spectrum for the entire natural-sound signal which comprises each natural-sound package and thereby a measure to prepare a frequency spectrum for the entire natural-sound signal is also considered to prepare a frequency spectrum for each natural-sound package. Furthermore, in such situations, the division of the natural-sound signal into a plurality of natural-sound packages is performed in connection with division of the frequency spectrum for the entire natural-sound signal into a plurality of frequency spectrum for each natural-sound package [step 15].

Step 17, processing each frequency spectrum to determine the liquid level in the pump station 1, entails using a processor equipment to find/identify the uniqueness of the prepared frequency spectrum belonging to the specific natural-sound package and to determine the liquid level in the pump station 1 corresponding to said frequency spectrum. This step 17 may be performed in different ways, which will be further exemplified hereinbelow.

Step 18, outputting the liquid level in the pump station 1, entails that the result of the processing of the frequency spectrum for each natural-sound package is saved in a memory (short-term and/or long-term) in order to be used for the monitoring and controlling of the operation of the pump station 1.

According to various embodiments, the control unit 11 controls the operation of the pump 2 based on a set of determined liquid levels in the pump station 1. For instance, the control unit 11 may stop the at least one pump 2 when the determined liquid level in the pump station 1 falls below a predetermined stop level. For instance, the control unit 11 may start the at least one pump 2 when the determined liquid level in the pump station 1 exceeds a predetermined start level. Other liquid levels may entail that more pumps are activated, or some pumps are deactivated, and/or the operational frequency of the active pump 2 is increased/decreased.

The control unit 11 comprises at least one processor and at least one memory, wherein the memory comprises instructions executed by the at least one processor to cause the at least one processor to execute said method. Thus, the present invention also includes a non-transitory computer-readable storage medium having computer-readable program code portions embedded therein, wherein the computer-readable program code portions when executed by a computer cause the computer to carry out the steps of the inventive method in order to determine the liquid level in a pump station by utilizing a sound recording device. The computer program product is preferably arranged in the control unit 11.

According to various embodiments of the present invention, step 17, processing each frequency spectrum to determine the liquid level in the pump station 1, comprises the sub-steps of:
- entering the frequency spectrum in a machine-learning model trained to determine the liquid level in the pump station 1, and
- determining the liquid level in said pump station 1 corresponding to the natural-sound package using the trained machine-learning model.

Thus, the machine-learning model is trained on the specific pump station 1, in order to be able to provide accurate and reliable output having essentially the same precision as prior art level sensors. The machine-learning model is trained on a set of training data originating from said pump station 1, collected during supervised operation of the pump station 1. The trained machine-learning model is also verified using a set of test data from said pump station 1, collected during supervised operation of the pump station 1. Thus, the machine-learning model is trained to discover a relationship between the liquid level in the pump station 1 and the frequency spectrum.

According to various embodiments, the set of training data comprises/covers a plurality of frequency spectrums, each having a liquid level label. The liquid level label is obtained using a certified temporary liquid level sensor or a primary liquid level sensor utilized in the pump station 1. This also applies to said set of test data.

According to various embodiments, the supervised operation of the pump station 1 covers one or more pump cycles, preferably also liquid levels outside the range of liquid levels corresponding to normal operation of the pump station 1. Normal operation of the pump station 1 is between a predetermined pump start level and a predetermined pump stop level. Thereby, for instance also additional/extra pump start level is comprised in the set of training data and in the set of test data.

According to various embodiments of the present invention, the control unit 11 comprises information about the total height of the tank 6, and wherein step 17, processing each frequency spectrum to determine the liquid level in the pump station 1, comprises the sub-steps of:
- processing the frequency spectrum to determine at least one resonance frequency of the air cavity located between the liquid level 12 and the top of the tank 6,
- determining the vertical distance between the liquid level 12 and the top of the tank 6, based on the determined at least one resonance frequency of the air cavity located between the liquid level and the top of the tank 6, and
- determining the liquid level in the pump station 1 based on the total height of the tank 6 and the determined vertical distance between the liquid level and the top of the tank 6.

According to various embodiments, the processing of the frequency spectrum determines a plurality of resonance frequencies of the air cavity located between the liquid level and the top of the tank 6.

According to various embodiments the above embodiment concerning determination of at least one resonance frequency is combined with the above embodiment concerning using a machine-learning model. More precisely, in such situations the determination of at least one resonance frequency is a first sub-step of step 17, processing each frequency spectrum. Thereafter the determined resonance frequency/frequencies are entered into the machine-learning model trained to determine the liquid level in the pump station 1.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Any subject matter falling outside the scope of the claims is provided for information purposes and for placing the invention into a relevant context.

It shall also be pointed out that all information about/concerning terms such as above, under, upper, lower, etc., shall be interpreted/read having the equipment oriented according to the figures, having the drawings oriented such that the references can be properly read. Thus, such terms only indicate mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Method for determining the liquid level in a pump station (1) by utilizing a sound recording device (13), wherein the pump station (1) comprises a tank (6) configured for temporary storage of a liquid, an inlet conduit (7) for providing influent liquid to the tank (6), at least one pump (2) for intermittently transporting the liquid into or away from the tank (6), and an outlet conduit (5) for guiding effluent liquid from the tank (6), wherein the pump station (1) further comprises a control unit (11) operatively connected to the pump (2) and configured for monitoring and controlling the operation of the pump station (1),
the method comprising the steps of:
- recording the natural-sound of the pump station (1) during operation of the pump station (1) using the sound recording device (13) located in the tank (6),
- preparing a plurality of natural-sound packages from the recorded natural-sound signal continuously during operation of the pump station (1), wherein each natural-sound package corresponds to a predetermined period of time of the entire operation of the pump station (1),
- preparing a frequency spectrum for each natural-sound package,
- processing each frequency spectrum to determine the liquid level in the pump station (1) corresponding to the natural-sound package, and
- outputting the liquid level in the pump station (1) corresponding to each natural-sound package.

2. The method according to claim 1, wherein each natural-sound package corresponds to a predetermined period of time that is equal to or more than 0,5 seconds and equal to or less than 10 seconds, preferably equal to or more than 1 second and equal to or less than 5 seconds.

3. The method according to claim 1 or 2, wherein each natural-sound package has a time label.

4. The method according to any preceding claim, wherein the natural-sound of the pump station (1) comprises at least one of: the sound of water splashes originating from influent liquid entering the tank (6), the sound of the active pump (2) pumping liquid into or away from the tank (6), the sound of the liquid flow in the outlet conduit (5), the sound of a fan configured to ventilate the tank (6), the sound of a flush valve configured to prevent settling in the tank (6), and any sound from the pump station surroundings.

5. The method according to any preceding claim, wherein the control unit (11) controls the operation of the pump (2) based on a set of determined liquid levels in the pump station (1).

6. The method according to claim 5, wherein the control unit (11) stops the at least one pump (2) when the determined liquid level in the pump station (1) falls below a predetermined stop level.

7. The method according to claim 5 or 6, wherein the control unit (11) starts the at least one pump (2) when the determined liquid level in the pump station (1) exceeds a predetermined start level.

8. The method according to any preceding claim, wherein the step of processing each frequency spectrum to determine the liquid level in the pump station (1) corresponding to the natural-sound package, comprises the sub-steps of:
- entering the frequency spectrum in a machine-learning model trained to determine the liquid level in the pump station (1), and
- determining the liquid level in said pump station (1) corresponding to the natural-sound package using the trained machine-learning model.

9. The method according to claim 8, wherein the machine-learning model is trained on a set of training data originating from said pump station (1), collected during supervised operation of the pump station (1).

10. The method according to claim 9, wherein the set of training data comprises a plurality of frequency spectrums, each having a liquid level label.

11. The method according to claim 9 or 10, wherein the supervised operation of the pump station (1) comprises at least one pump cycle.

12. The method according to any of claims 1-7, wherein the control unit (11) comprises information about the total height of the tank (6), and wherein the step of processing each frequency spectrum to determine the liquid level in the pump station (1) corresponding to the natural-sound package, comprises the sub-steps of:
- processing the frequency spectrum to determine at least one resonance frequency of the air cavity located between the liquid level and the top of the tank (6),
- determining the vertical distance between the liquid level and the top of the tank (6), based on the determined at least one resonance frequency of the air cavity located between the liquid level and the top of the tank (6), and
- determining the liquid level in the pump station (1) based on the total height of the tank (6) and the determined vertical distance between the liquid level and the top of the tank (6).

13. The method according to claim 12, wherein the processing of the frequency spectrum determines a plurality of resonance frequencies of the air cavity located between the liquid level and the top of the tank (6).

14. The method according to any preceding claim, wherein the control unit (11) comprises at least one processor and at least one memory, the memory comprising instructions executed by the at least one processor to cause the at least one processor to execute said method.
